# EUROPÄISCHE PATENTSCHRIFT

(11) **EP 4 216 489 B1**
(45) Veröffentlichungstag und Bekanntmachung des Hinweises auf die Patenterteilung: **02.12.2026**
(21) Anmeldenummer: 23152486.9
(22) Anmeldetag: 19.01.2023
(51) Int. Cl.: H04L 9/08, H04L 9/40, H04L 67/12

(54) **VERFAHREN ZUR ÄNDERUNG EINES IST-ZUGANGSSCHLÜSSELS IN EINEM FELDGERÄT DER AUTOMATISIERUNGSTECHNIK**
METHOD FOR CHANGING AN ACTUAL ACCESS KEY IN A FIELD DEVICE USED IN AUTOMATION TECHNOLOGY
PROCÉDÉ DE MODIFICATION D'UNE CLÉ D'ACCÈS RÉELLE DANS UN APPAREIL DE TERRAIN DE LA TECHNIQUE D'AUTOMATISATION

(30) Priorität: 25.01.2022 DE 102022101689
(43) Veröffentlichungstag der Anmeldung: 26.07.2023
(73) Patentinhaber: KROHNE Messtechnik GmbH, 47058 Duisburg (DE)
(72) Erfinder: Weßkamp, Patrick, 45478 Mülheim (DE)
(74) Vertreter: Gesthuysen Patentanwälte

(56) Entgegenhaltungen:
- US-A1- 2009 292 918
- US-A1- 2012 170 751

## Beschreibung

Die Erfindung betrifft ein Verfahren zur Änderung eines Ist-Zugangsschlüssels in einem Feldgerät der Automatisierungstechnik, wobei in dem Feldgerät eine Feldgerätekennung und der Ist-Zugangsschlüssel abgelegt sind, wobei ein Bediengerät über eine Kommunikationsverbindung mit dem Feldgerät verbindbar ist, wobei in dem Bediengerät eine Bediengerätekennung und der Ist-Zugangsschlüssel abgelegt sind, wobei das Feldgerät durch zumindest mittelbare Auswertung seines Ist-Zugangsschlüssels und des Ist-Zugangsschlüssels des Bediengeräts die Zugangsberechtigung des Bediengeräts überprüft und wobei bei Vorliegen der Zugangsberechtigung das Bediengerät mit dem Feldgerät einen Neu-Zugangsschlüssel vereinbart, welchen Neu-Zugangsschlüssel das Feldgerät als neuen Ist-Zugangsschlüssel ablegt.

Bei Feldgeräten der Automatisierungstechnik handelt es sich um Messgeräte oder auch Aktoren, die mit einem physikalischen Prozess, beispielsweise einer industriellen Prozessanlage, in Verbindung stehen und Messdaten von entsprechenden Prozessgrößen (zum Beispiel Durchflüsse, Füllstände, Temperaturen, Drücke, pH-Werte) liefern oder auch auf den Prozess einwirken, zum Beispiel indem Ventile, Motoren oder Heizelemente angesteuert werden. In einem technischen Prozess ist in der Regel eine Vielzahl von Feldgeräten im Einsatz, nicht selten mehrere Zehn oder sogar mehrere Hundert Feldgeräte. Die Feldgeräte sind üblicherweise über einen seriellen Feldbus zumindest teilweise miteinander verbunden und können über entsprechende Feldbus-Nachrichten angesprochen werden bzw. über Feldbus-Nachrichten auch selbst Informationen versenden.

Zur Wartung oder Parametrierung einzelner Feldgeräte ist vorgesehen, dass das jeweilige Feldgerät mit einem Bediengerät über eine Kommunikationsverbindung in Verbindung gebracht wird. Diese Kommunikationsverbindung ist oft verschieden von der Feldbusschnittstelle des Feldgeräts, sie kann proprietär ausgestaltet sein, häufig ist sie aber an etablierte Standards angelehnt (z. B. USB, Bluetooth, Ethernet). In den hier betrachteten Fällen ist es aus Sicherheitsgründen gewünscht, dass nicht jedes beliebige Bediengerät oder jeder beliebige Nutzer Zugang zu dem Feldgerät erhält, es ist vielmehr gewünscht, dass bestimmte Bediengeräte oder Nutzer von Bediengeräten überhaupt keinen Zugang haben sollen oder möglicherweise auch nur beschränkten Zugang zu dem Feldgerät erlangen können. Um dies zu gewährleisten, muss sich ein angeschlossenes Bediengerät zunächst bei dem Feldgerät identifizieren. Dies geschieht hier, indem das Feldgerät durch zumindest indirekte Auswertung seines Ist-Zugangsschlüssels und des Ist-Zugangsschlüssels des Bediengeräts die Zugangsberechtigung des Bediengeräts überprüft. Dies kann durch direkte Auswertung der genannten Ist-Zugangsschlüssel geschehen, indem das Bediengerät dem Feldgerät seinen Ist-Zugangsschlüssel überträgt und das Feldgerät überprüft, ob mit dem Ist-Zugangsschlüssel eine Zugangsberechtigung verbunden ist (direkter Vergleich der Ist-Zugangsschlüssel). Dies kann aber auch durch indirekte Auswertung der genannten Ist-Zugangsschlüssel geschehen, indem unter Verwendung der Ist-Zugangsschlüssel auf dem Feldgerät und auf dem Bediengerät Prüfwerte abgeleitet werden, die demzufolge von dem jeweiligen Ist-Zugangsschlüssel abhängen, und dann diese abgeleiteten Prüfwerte ausgewertet werden: die Ist-Zugangsschlüssel werden hier also tatsächlich indirekt ausgewertet und werden nicht als solche zwischen Feldgerät und Bediengerät übertragen. Beispiele für solch indirekte Auswertungen sind die Challenge-Response-Authentifizierung, das Zero-Knowledge-Verfahren oder auch das Password Authenticated Connection Establishment (PACE). Erst danach wird dem Bediengerät - möglicherweise nur in einem bestimmten Rechteumfang - Zugriff auf Funktionen und Parameter des Feldgerätes gewährt.

In der hier betrachteten Situation vereinbart das Bediengerät - im Fall einer vorliegenden Zugangsberechtigung - mit dem Feldgerät einen Neu-Zugangsschlüssel, den das Feldgerät dann als neuen Ist-Zugangsschlüssel ablegt, also datentechnisch abspeichert; auch in dem Bediengerät ist der vereinbarte Neu-Zugangsschlüssel schlussendlich als neuer Ist-Zugangsschlüssel abgespeichert. Es ist bekannt, dass die Vereinbarung des Neu-Zugangsschlüssels zwischen Feldgerät und Bediengerät so realisiert ist, dass der Neu-Zugangsschlüssel zunächst auf dem Bediengerät festgelegt (beispielsweise durch Nutzereingabe) und von hier zu dem Feldgerät übertragen wird. Die Einrichtung eines neuen Ist-Zugangsschlüssels kann unterschiedlich motiviert sein. Der Ist-Zugangsschlüssel kann beispielsweise geändert werden, um einen definierten Sicherheitszustand neu zu etablieren, zum Beispiel wenn Unsicherheiten darüber bestehen, ob der alte Ist-Zugangsschlüssel möglicherweise eine ungewollte Verbreitung gefunden hat. Der Ist-Zugangsschlüssel kann im Rahmen eines eingerichteten Sicherheitsprotokolls durch Zeitablauf, nach einer bestimmten Anzahl von Verbindungsherstellungen über die Kommunikationsverbindung oder einfach zufällig erneuert werden. Der Ist-Zugangsschlüssel kann auch durch einen spontanen Nutzereingriff erneuert werden, beispielsweise durch Eingabe eines neuen Ist-Zugangsschlüssels in das Bediengerät. In jedem Fall stellt sich die Frage, wie der neue Ist-Zugangsschlüssel möglichst geschickt verwaltet wird, damit beispielsweise ebenfalls zugangsberechtigte Nutzer und/oder Bediengeräte, die grundsätzlich zwar Zugang zu dem Feldgerät haben, aber nur über den alten Ist-Zugangsschlüssel verfügen, nicht von einem Zugang zu dem Feldgerät ausgeschlossen werden.

Aufgabe der vorliegenden Erfindung ist es daher, das eingangs beschriebene Verfahren zur Änderung eines Ist-Zugangsschlüssels in einem Feldgerät so auszugestalten und weiterzubilden, dass eine Änderung des Ist-Zugangsschlüssels möglichst geschickt und mit wenig Aufwand auch im Anwendungsfall mehrerer berechtigter Nutzer und/oder Bediengeräte bewältigt wird.

Die zuvor beschriebene und hergeleitete Aufgabe wird bei dem eingangs beschriebenen Verfahren zunächst dadurch gelöst, dass auf einem Datenbankserver eine Schlüsseldatenbank bereitgestellt ist und die Schlüsseldatenbank für eine Mehrzahl von Feldgeräten zumindest die Feldgerätekennung des jeweiligen Feldgeräts, den Ist-Zugangsschlüssel des jeweiligen Feldgeräts und die Kennung wenigstens eines zugriffsberechtigten Nutzers und/oder wenigstens eines zugriffsberechtigten Bediengeräts auf das jeweilige Feldgerät umfasst. Die Zugriffsberechtigung kann also beispielsweise an eine Person geknüpft sein, den zugriffsberechtigten Nutzer, oder auch an ein technisches Gerät, also das zugriffsberechtigte Bediengerät. Ein zugriffsberechtigter Nutzer könnte beispielsweise ein beliebiges Bediengerät zu einem zugriffsberechtigten Bediengerät machen, indem sich der zugriffsberechtigte Nutzer gegenüber dem Bediengerät als nutzungsberechtigt ausweist.

Ferner ist vorgesehen, dass der Datenbankserver für wenigstens einen zugriffsberechtigten Nutzer oder wenigstens ein zugriffsberechtigtes Bediengerät aus der Schlüsseldatenbank einen Schlüsseldatensatz erzeugt, wobei der Schlüsseldatensatz für die Feldgeräte, zu denen der zugriffsberechtigte Nutzer oder das zugriffsberechtigte Bediengerät eine Zugriffsberechtigung hat, die Feldgerätekennung und den Ist-Zugangsschlüssel des jeweiligen Feldgeräts umfasst. Durch diese Maßnahme wird erreicht, dass in einem zentralen Datenbankserver alle für den Zugriff auf ein Feldgerät oder auf mehrere Feldgeräte relevanten Daten zentral hinterlegt sind und aus der Schlüsseldatenbank individuelle Schlüsseldatensätze erzeugt werden können. Die Feldgerätekennung ist ein informationstechnisches Datum, das eindeutig für das Feldgerät ist. Es kann sich um die werksmäßig vorgegebene Seriennummer des Feldgeräts handeln, es kann sich aber auch um eine eindeutige Information handeln, die dem Feldgerät nachträglich zugeordnet worden ist, beispielsweise bei der Einrichtung der Anlage, in der das Feldgerät verbaut ist.

Der Datenbankserver ist auf vielerlei Arten technisch realisierbar, er kann beispielsweise als Dienst einer ohnehin vorhandenen Leitwarte realisiert sein, als hardwaremäßig separat realisierter Datenbankserver, der im Umfeld der Anlage, in der die Feldgeräte installiert sind, lokal kontaktierbar ist, er kann auch als ausgelagerter Cloud-Dienst im World-Wide-Web realisiert sein, wenn das vereinbar mit den vorgegebenen Anforderungen zur Datensicherheit ist. Ähnlich verhält es sich mit der Herstellung einer Verbindung zwischen Bediengerät und Datenbankserver und dem Datenaustausch zwischen den Geräten, auch hier sind verschiedene Möglichkeiten denkbar, die abhängig von der zuvor genannten Realisierung des Datenbankservers sind. Auf die genaue Realisierung des Datenbankservers und die informationstechnische Kontaktierung des Datenbankservers durch Bediengeräte kommt es im Einzelnen jedoch nicht an.

Das Verfahren sieht weiterhin vor, dass der Schlüsseldatensatz auf das Bediengerät des zugriffsberechtigten Nutzers oder auf das zugriffsberechtigte Bediengerät übertragen wird, sodass das Bediengerät des zugriffsberechtigten Nutzers oder das zugriffsberechtigte Bediengerät über die Ist-Zugangsschlüssel der Feldgeräte verfügt, für die eine Zugangsberechtigung vorliegt.

Durch die beschriebenen Maßnahmen ist es insgesamt möglich, Ist-Zugangsschlüssel für ein Feldgerät oder für mehrere Feldgeräte zentral zu verwalten und zugriffsberechtigte Nutzer bzw. zugriffsberechtigte Bediengeräte mit einem aus der Schlüsseldatenbank individuell abgeleiteten Schlüsseldatensatz zu versorgen. Dies ist natürlich auch in dem Fall möglich und gerade dann vorteilhaft, wenn sich Zugangsinformationen, also Ist-Zugangsschlüssel, ändern bzw. geändert haben.

Bei einer Weiterbildung des Verfahrens ist vorgesehen, dass der Schlüsseldatensatz vor seiner Übertragung auf das Bediengerät des zugriffsberechtigten Nutzers oder auf das zugriffsberechtigte Bediengerät verschlüsselt wird und der verschlüsselte Schlüsseldatensatz auf dem Bediengerät vor der Nutzung entschlüsselt wird. Dadurch wird ein zusätzliches Maß an Datensicherheit realisiert. Die Verschlüsselung und Entschlüsselung kann unterschiedlich aufwendig implementiert sein. In einer einfachen Variante kann mit symmetrischen Schlüsseln gearbeitet werden, die auf dem Datenbankserver und bei dem zugriffsberechtigten Nutzer bzw. dem zugriffsberechtigten Bediengerät hinterlegt sind. Bei einer aufwendigeren Implementierung wird mit asymmetrischen Schlüsseln gearbeitet, wobei auf dem Datenbankserver zu jedem zugriffsberechtigten Nutzer bzw. zu jedem zugriffsberechtigten Bediengerät der öffentliche Schlüssel hinterlegt ist, und entsprechend der zugriffsberechtigte Nutzer bzw. das zugriffsberechtigte Bediengerät den entsprechenden privaten Schlüssel besitzt, sodass auf dem zugriffsberechtigten Bediengerät dann der mit dem öffentlichen Schlüssel verschlüsselte Schlüsseldatensatz mit dem korrespondierenden privaten Schlüssel entschlüsselt werden kann.

Eine weitere bevorzugte Weiterbildung des Verfahrens zeichnet sich dadurch aus, dass in der Schlüsseldatenbank und in dem aus der Schlüsseldatenbank erzeugten Schlüsseldatensatz zu den Ist-Zugangsschlüsseln jeweils auch der ursprüngliche Eintragungszeitpunkt des Ist-Zugangsschlüssels vermerkt wird. Dadurch wird die Möglichkeit geschaffen, zu erkennen, welcher Ist-Zugangsschlüssel von mehreren Ist-Zugangsschlüsseln der aktuellere ist. Wichtig ist, dass nur der Zeitpunkt der ursprünglichen Erstellung des Ist-Zugangsschlüssels vermerkt wird und nicht etwa auf jedem Gerät, auf das der Ist-Zugangsschlüssel übertragen und vermerkt wird, der Zeitpunkt des Übertragens und Vermerkens. Dies ist aber ohne Weiteres möglich, da im Rahmen des Verfahrens jederzeit eindeutig entscheidbar ist, ob ein Ist-Zugangsschlüssel bzw. ein Neu-Zugangsschlüssel neu angelegt oder ein bekannter, bereits angelegter Ist-Zugangsschlüssel nur weitergegeben wird.

Im Zusammenhang mit dem Vermerken von Eintragungszeitpunkten von Ist-Zugangsschlüsseln sieht eine weitere Weiterbildung des Verfahrens vor, dass in einem Synchronisationsschritt die Schlüsseldatenbank und der Schlüsseldatensatz wenigstens eines Bediengeräts hinsichtlich der Eintragungszeitpunkte korrespondierender Ist-Zugangsschlüssel verglichen werden, und bei abweichenden Eintragungszeitpunkten der neueste Ist-Zugangsschlüssel mit seinem Eintragungszeitpunkt dort nachgetragen wird, wo nur der ältere Ist-Zugangsschlüssel vorliegt, sodass die Schlüsseldatenbank und der Schlüsseldatensatz des Bediengeräts übereinstimmende Ist-Zugangsschlüssel für das jeweilige Feldgerät aufweisen. Bevorzugt wird der Synchronisationsschritt automatisch durchgeführt, sobald sich ein Bediengerät mit der Schlüsseldatenbank verbindet. Vorzugsweise ersetzt der nachgetragene neueste Ist-Zugangsschlüssel nicht den älteren Ist-Zugangsschlüssel, sondern es wird der nachgetragene neueste Ist-Zugangsschlüssel zusätzlich zu dem älteren Ist-Zugangsschlüssel vermerkt, sodass der zuvor geltende Ist-Zugangsschlüssel auch noch verfügbar ist. Noch ältere Ist-Zugangsschlüssel werden in einer weiteren bevorzugten Ausgestaltung gelöscht, sodass nur die letzten beiden aktuellsten Versionen des Ist-Zugangsschlüssels verfügbar sind.

Die nachfolgend beschriebene Weiterbildung des Verfahrens befasst sich mit dem Fall, dass ein neuer Ist-Zugangsschlüssel direkt in einem Feldgerät vorgegeben wird bzw. über ein mit dem Feldgerät verbundenes Bediengerät in dem Feldgerät vorgegeben wird. Bevorzugt wird dann so vorgegangen, dass dem Feldgerät von dem über die Kommunikationsverbindung mit dem Feldgerät in Verbindung stehenden Bediengerät ein Neu-Zugangsschlüssel vorgegeben wird und der Neu-Zugangsschlüssel von dem Feldgerät als neuer Ist-Zugangsschlüssel abgelegt wird, wobei das Bediengerät den Neu-Zugangsschlüssel als neuen Ist-Zugangsschlüssel in seinem Schlüsseldatensatz ablegt. Entweder stellt das Bediengerät eine Verbindung zur Schlüsseldatenbank her und der Synchronisationsschritt wird eingeleitet, oder das Bediengerät fordert den Nutzer des Bediengeräts auf, eine Verbindung zur Schlüsseldatenbank herzustellen, um den Synchronisationsschritt durchführen zu können. So wird sichergestellt, dass der neu festgelegte Neu-Zugangsschlüssel auch in der Schlüsseldatenbank aktualisiert wird, selbst wenn der Neu-Zugangsschlüssel erstmalig durch den Nutzer des Bediengeräts bzw. durch das Bediengerät auf dem Feldgerät vorgegeben worden ist. Die lokale Information des Neu-Zugangsschlüssels auf dem Bediengerät und dem Feldgerät wird durch Übertragen auf die Schlüsseldatenbank allen Nutzern verfügbar gemacht.

Das nachfolgende Ausführungsbeispiel des Verfahrens beschäftigt sich mit dem Anwendungsfall, dass zunächst auf der Schlüsseldatenbank ein Neu-Zugangsschlüssel für ein Feldgerät vorgegeben wird. In diesem Fall wird der Neu-Zugangsschlüssel von der Schlüsseldatenbank für das Feldgerät als neuer Ist-Zugangsschlüssel abgelegt und zumindest der zuletzt gültige Ist-Zugangsschlüssel für das Feldgerät bleibt als alter Ist-Zugangsschlüssel in der Schlüsseldatenbank gespeichert. Bei Erzeugung des Schlüsseldatensatzes werden der neue Ist-Zugangsschlüssel und zumindest der zuletzt gültige Ist-Zugangsschlüssel für das Feldgerät in den Schlüsseldatensatz aufgenommen. Insbesondere bleibt im Synchronisationsschritt beim Nachtragen des neuesten Ist-Zugangsschlüssels zumindest der zuvor geltende ältere Ist-Zugangsschlüssel erhalten. Im Gegensatz zu dem zuvor genannten Ausführungsbeispiel, bei dem der Neu-Zugangsschlüssel zunächst auf dem Bediengerät vorgegeben worden ist, wird der Neu-Zugangsschlüssel hier zuerst auf dem Datenbankserver bzw. in der Schlüsseldatenbank des Datenbankservers vorgegeben. Auch hier erweist es sich als vorteilhaft, wenn nicht nur der Neu-Zugangsschlüssel als neuer Ist-Zugangsschlüssel gespeichert wird, sondern zumindest auch noch der zuletzt gültige Ist-Zugangsschlüssel gespeichert wird vor der Aufnahme des Neu-Zugangsschlüssels als neuer Ist-Zugangsschlüssel.

Eine bevorzugte Weiterbildung des zuvor genannten Verfahrens zeichnet sich dadurch aus, dass das Bediengerät mit dem Feldgerät verbunden ist, zu dem es eine Zugangsberechtigung hat, dass das Bediengerät einen Schlüsseldatensatz mit dem Ist-Zugangsschlüssel und dem zuvor geltenden Ist-Zugangsschlüssel für das Feldgerät aufweist, dass das Bediengerät zur Erlangung der Zugangsberechtigung zu dem Feldgerät den zuvor geltenden Ist-Zugangsschlüssel verwendet und bei Vorliegen der Zugangsberechtigung dem Feldgerät den Ist-Zugangsschlüssel als Neu-Zugangsschlüssel übermittelt.

Eine alternative Ausgestaltung des zuvor genannten Ausführungsbeispiels des Verfahrens sieht vor, dass das Bediengerät mit dem Feldgerät verbunden ist, zu dem es eine Zugangsberechtigung hat, dass das Bediengerät einen Schlüsseldatensatz mit dem Ist-Zugangsschlüssel und dem zuvor geltenden Ist-Zugangsschlüssel für das Feldgerät aufweist, dass das Bediengerät zur Erlangung der Zugangsberechtigung zu dem Feldgerät zunächst den Ist-Zugangsschlüssel verwendet und bei Verweigerung der Zugangsberechtigung den zuvor geltenden Ist-Zugangsschlüssel verwendet. Anhand dieses Beispiels wird deutlich, dass das Speichern des zuvor geltenden Ist-Zugangsschlüssels nach Bekanntgabe eines Neu-Zugangsschlüssels als neuer Ist-Zugangsschlüssel vorteilhaft ist, nämlich dann, wenn das Feldgerät von dem in der Schlüsseldatenbank zwar vorgemerkten, aber dem Feldgerät noch nicht bekannt gegebenen Neu-Zugangsschlüssel (noch) nichts weiß.

Eine Weiterentwicklung des Verfahrens, bei dem der Neu-Zugangsschlüssel zunächst in der Schlüsseldatenbank vorgegeben worden ist, ist dadurch gekennzeichnet, dass der Neu-Zugangsschlüssel, der in der Schlüsseldatenbank für das Feldgerät als neuer Ist-Zugangsschlüssel abgelegt wird, mit einem Synchronisationsflag versehen wird, wobei das Synchronisationsflag anzeigt, ob der neue Ist-Zugangsschlüssel auf dem Feldgerät hinterlegt ist oder nicht auf dem Feldgerät hinterlegt ist, und dass das Synchronisationsflag zu Beginn anzeigt, dass der Ist-Zugangsschlüssel nicht auf dem Feldgerät hinterlegt ist. Bei Erzeugung des Schlüsseldatensatzes wird das Synchronisationsflag in den Schlüsseldatensatz aufgenommen. Im Synchronisationsschritt wird das Synchronisationsflag abgeglichen, wobei das Synchronisationsflag aber nur von "Ist-Zugangsschlüssel nicht auf dem Feldgerät hinterlegt" zu "Ist-Zugangsschlüssel auf dem Feldgerät hinterlegt" geändert wird.

Bei einer Weiterentwicklung des vorangehenden Verfahrensschrittes ist das Bediengerät mit dem Feldgerät verbunden und das Bediengerät wertet das Synchronisationsflag des Ist-Zugangsschlüssels aus. In dem Fall, dass das Synchronisationsflag "Ist-Zugangsschlüssel nicht auf dem Feldgerät hinterlegt" anzeigt, verwendet das Bediengerät zur Erlangung der Zugangsberechtigung zu dem Feldgerät den zuvor geltenden Ist-Zugangsschlüssel und andernfalls verwendet es den Ist-Zugangsschlüssel.

Bei einer zusätzlichen Weiterentwicklung des Verfahrens ist das Bediengerät mit dem Feldgerät verbunden, zu dem es eine Zugangsberechtigung hat, und das Bediengerät ändert nach Übertragung des neuen Ist-Zugangsschlüssels auf das Feldgerät in seinem Schlüsseldatensatz das Synchronisationsflag des übertragenen neuen Ist-Zugangsschlüssels auf "Ist-Zugangsschlüssel auf dem Feldgerät hinterlegt".

Bei einer weiteren bevorzugten Ausgestaltung des Verfahrens ist vorgesehen, dass bei Vorliegen der Zugangsberechtigung das Bediengerät mit dem Feldgerät einen Neu-Zugangsschlüssel vereinbart, indem das Bediengerät das Feldgerät auffordert, einen Neu-Zugangsschlüssel bereitzustellen, also einen Neu-Zugangsschlüssel zu dem Bediengerät zu übertragen. Das Feldgerät kann den Neu-Zugangsschlüssel beispielsweise durch einen Zufallszahlengenerator erzeugen, insbesondere durch einen nicht-deterministischen Zufallszahlengenerator. Der von dem Feldgerät erzeugte Neu-Zugangsschlüssel kann sogleich auf dem Feldgerät als neuer Ist-Zugangsschlüssel abgespeichert werden, es kann aber auch erforderlich sein, dass der Neu-Zugangsschlüssel erst als solcher wieder von dem Bediengerät auf das Feldgerät rückübertragen werden muss, um die Einrichtung des Neu-Zugangsschlüssels zu vollenden.

Im Einzelnen gibt es nun eine Vielzahl von Möglichkeiten, das erfindungsgemäße Verfahren zur Änderung eines Ist-Zugangsschlüssels in einem Feldgerät auszugestalten. Entsprechende Weiterbildungen sind Gegenstand der Unteransprüche und werden nachfolgend anhand von dargestellten Ausführungsbeispielen beschrieben. In der Zeichnung zeigen
- Fig. 1: ganz schematisch das Verfahren zur Änderung eines Ist-Zugangsschlüssels in einem Feldgerät, wie es aus dem Stand der Technik bekannt ist,
- Fig. 2: schematisch das erfindungsgemäße Verfahren unter Einsatz eines Datenbankservers mit einer Schlüsseldatenbank und der Erzeugung und Verteilung von Schlüsseldatensätzen,
- Fig. 3: schematisch eine Ausgestaltung des Verfahrens mit einer Verschlüsselung und Entschlüsselung des Schlüsseldatensatzes,
- Fig. 4: schematisch eine Ausgestaltung des Verfahrens mit Vermerk des ursprünglichen Eintragungszeitpunktes des Ist-Zugangsschlüssels,
- Fig. 5: schematisch einen Synchronisationsschritt zum Datenabgleich zwischen der Schlüsseldatenbank des Datenbankservers und dem Schlüsseldatensatz eines Bediengeräts,
- Fig. 6: schematisch die Vorgabe eines Neu-Zugangsschlüssels über den Datenbankserver,
- Fig. 7: schematisch die Weitergabe eines Neu-Zugangsschlüssels von einem Bediengerät an ein Feldgerät, wobei der Neu-Zugangsschlüssel der Ist-Zugangsschlüssel des Bediengeräts ist und
- Fig. 8: schematisch teilweise das Verfahren zur Änderung eines Ist-Zugangsschlüssels in einem Feldgerät unter Verwendung eines Synchronisationsflags.

In den Figuren ist in Gänze oder in Teilen ein Verfahren 1 zur Änderung eines Ist-Zugangsschlüssels F1_CUR in einem Feldgerät F1 der Automatisierungstechnik dargestellt. Es versteht sich von selbst, dass bei den in der Praxis vorkommenden automatisierungstechnischen oder prozesstechnischen Systemen eine Vielzahl von Feldgeräten eingesetzt wird, die üblicherweise über einen Feldbus miteinander verbunden sind. Zum Zweck der Übersichtlichkeit ist hier immer nur ein Feldgerät F1 dargestellt, was die Allgemeinheit der Darstellung jedoch nicht einschränkt.

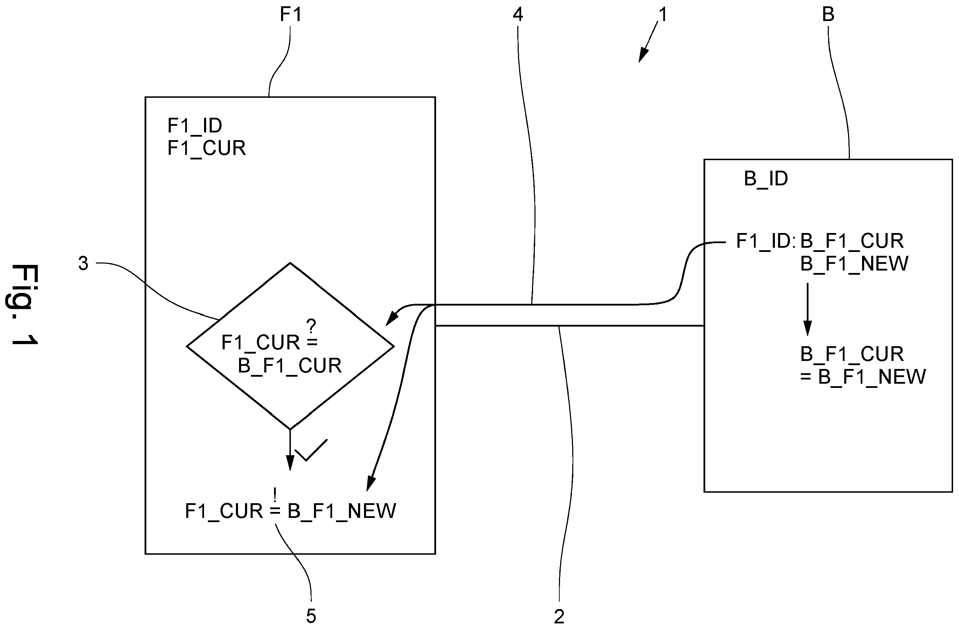

Das in Fig. 1 dargestellte Ausführungsbeispiel zeigt ein aus dem Stand der Technik bekanntes Verfahren 1, mit dem der Ist-Zugangsschlüssel F1_CUR in dem Feldgerät F1 geändert wird. Das Feldgerät F1 weist eine Feldgerätekennung F1_ID auf, anhand derer es eindeutig identifizierbar ist. Auf dem Feldgerät F1 ist auch der Ist-Zugangsschlüssel F1_CUR abgelegt. Ein Bediengerät B ist über eine Kommunikationsverbindung 2 mit dem Feldgerät F1 verbindbar und es ist in Fig. 1 auch mit dem Feldgerät F1 verbunden. Bei dem Bediengerät B kann es sich beispielsweise um ein Handy, einen Handheld-Rechner, ein Tablet, einen Laptop-Rechner usw. handeln; in der Darstellung ist es ein Handy mit einer entsprechenden App.

In dem Bediengerät B sind eine Bediengerätekennung B_ID und ein Ist-Zugangsschlüssel B_F1_CUR abgelegt. Wenn das Bediengerät B mit dem Feldgerät F1 verbunden wird, versucht das Feldgerät F1 herauszufinden, inwieweit das Bediengerät B eine Zugangsberechtigung zu dem Feldgerät F1 besitzt. Infolge eines dazu dienenden Datenaustauschs, dessen genauer Ablauf hier im Detail nicht von Interesse ist, erfährt das Feldgerät F1 in dem dargestellten Ausführungsbeispiel jedenfalls den Ist-Zugangsschlüssel B_F1_CUR, der auf dem Bediengerät B für das Feldgerät F1 abgelegt ist. Das Feldgerät F1 überprüft durch unmittelbare Auswertung 3 seines eigenen Ist-Zugangsschlüssels F1_CUR und des Ist-Zugangsschlüssels B _F1_CUR des Bediengeräts B für das Feldgerät F1 die Zugangsberechtigung des Bediengeräts B. Wie im allgemeinen Beschreibungsteil ausgeführt worden ist, kann eine Auswertung der Ist-Zugangsschlüssel F1_CUR, B_F1_CUR auch mittelbar erfolgen (nicht dargestellt), indem unter Verwendung der jeweiligen Ist-Zugangsschlüssel F1_CUR, B_F1_CUR auf dem Bediengerät B und dem Feldgerät F1 Prüfwerte abgeleitet werden, die dann einem Vergleich unterzogen werden. Bei Vorliegen der Zugangsberechtigung das Bediengeräts B zu dem Feldgerät F1 übermittelt 4 das Bediengerät B dem Feldgerät F1 einen Neu-Zugangsschlüssel B_F1_NEW, welchen Neu-Zugangsschlüssel B_F1_NEW das Feldgerät F1 als neuen Ist-Zugangsschlüssel F1_CUR ablegt 5. Der Neu-Zugangsschlüssel B_F1_NEW kann in dem Bediengerät B abgespeichert gewesen sein, er kann von dem Nutzer des Bediengeräts eingegeben worden sein, er kann auch in dem Bediengerät über einen Zufallsgenerator erzeugt worden sein; im dargestellten Ausführungsbeispiel ist er vom Nutzer des Bediengeräts B über eine Eingabeschnittstelle des Bediengeräts B eingegeben worden. In einer alternativen Variante, die hier nicht dargestellt ist, wird das Feldgerät F1 von dem Bediengerät B aufgefordert, einen Neu-Zugangsschlüssel zur Verfügung zu stellen, was beispielsweise durch einen Zufallszahlengenerator auf dem Feldgerät bewerkstelligt werden kann.

In den nachfolgenden Figuren sind Ausgestaltungen des Verfahrens 1 dargestellt, mit denen die Verwaltung des neuen Zugangsschlüssels in dem Feldgerät F1 oder eines neuen, dem Feldgerät F1 zugedachten Zugangsschlüssels auf einfache Art und Weise gelingt.

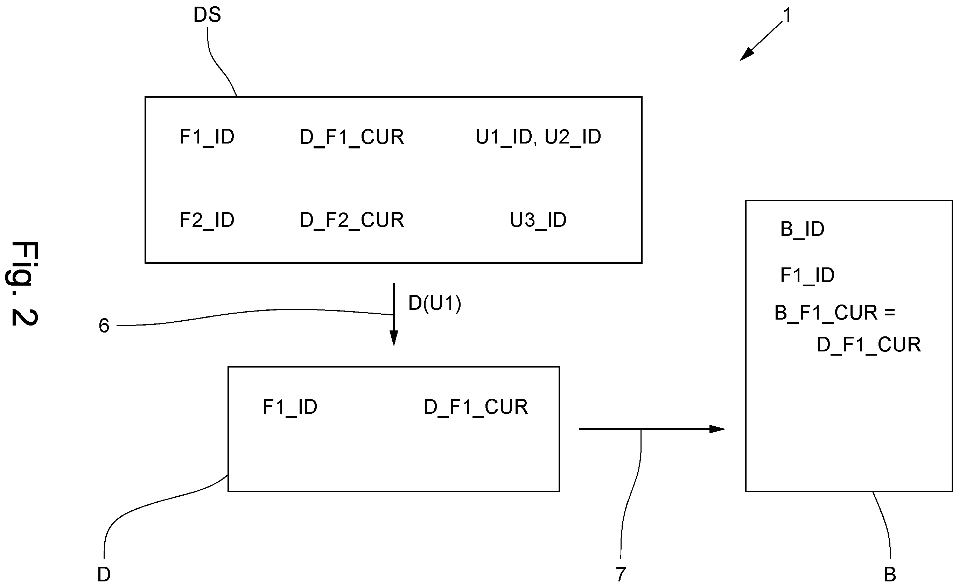

Fig. 2 zeigt, dass bei dem Verfahren 1 zunächst vorgesehen ist, auf einem Datenbankserver DS eine Schlüsseldatenbank bereitzustellen. Die Schlüsseldatenbank umfasst für eine Mehrzahl von Feldgeräten F1, F2 zumindest die Feldgerätekennung F1_ID, F2_ID des jeweiligen Feldgeräts F1, F2, den Ist-Zugangsschlüssel D_F1_CUR, D_F2_CUR des jeweiligen Feldgeräts F1, F2 und die Kennung U1_ID, U2_ID, U3_ID wenigstens eines zugriffsberechtigten Nutzers U1, U2, U3. Die Schlüsseldatenbank könnte alternativ oder zusätzlich auch wenigstens die Kennung eines zugriffsberechtigten Bediengeräts B auf das jeweilige Feldgerät F1, F2 umfassen. In dem Ausführungsbeispiel ist die Zugriffsberechtigung aber an Nutzer U1, U2, U3 gebunden.

In Fig. 2 ist weiter gezeigt, dass der Datenbankserver DS für einen zugriffsberechtigten Nutzer U1 aus der Schlüsseldatenbank einen Schlüsseldatensatz D(U1) erzeugt 6, wobei der Schlüsseldatensatz D für das in diesem Fall eine Feldgerät F1, zu dem der zugriffsberechtigte Nutzer U1 eine Zugriffsberechtigung hat, die Feldgerätekennung F1_ID und den Ist-Zugangsschlüssel D_F1_CUR des jeweiligen Feldgeräts F1 umfasst.

Der Schlüsseldatensatz D wird dann auf das Bediengerät B des zugriffsberechtigten Nutzers U1 übertragen 7, sodass das Bediengerät B des zugriffsberechtigten Nutzers U1 über den Ist-Zugangsschlüssel B_F1_CUR = D_F1_CUR des Feldgeräts F1 verfügt, für das eine Zugangsberechtigung vorliegt. Das Verfahren 1 ermöglicht also eine zentrale Schlüsselverwaltung und eine individuelle Schlüsselverteilung auf berechtigte Nutzer und/oder berechtigte Bediengeräte, was eine essenzielle technische Grundlage für die gewünschte Schlüsselorganisation und Schlüsselverteilung ist.

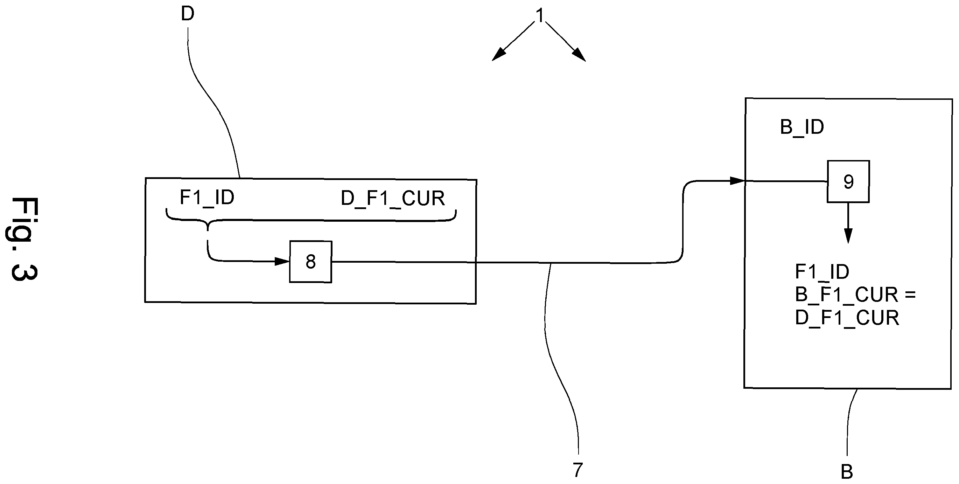

Fig. 3 zeigt eine bevorzugte Ausgestaltung des Verfahrens 1, bei der der Schlüsseldatensatz D vor seiner Übertragung 7 auf das Bediengerät B des zugriffsberechtigten Nutzers U1 verschlüsselt 8 wird, und bei der der verschlüsselte Schlüsseldatensatz D auf dem Bediengerät B vor der Nutzung entschlüsselt 9 wird, wodurch eine zusätzlich Datensicherheit bei dem Verfahren 1 erzielt wird. Im dargestellten Ausführungsbeispiel wird die Verschlüsselung mittels eines asymmetrischen Schlüsselpaares realisiert. Der Schlüsseldatensatz wird dabei mit dem öffentlichen Schlüssel des asymmetrischen Schlüsselpaares verschlüsselt und auf dem Bediengerät B des zugriffsberechtigten Nutzers U1 mit dem entsprechenden privaten Schlüssel des asymmetrischen Schlüsselpaares entschlüsselt.

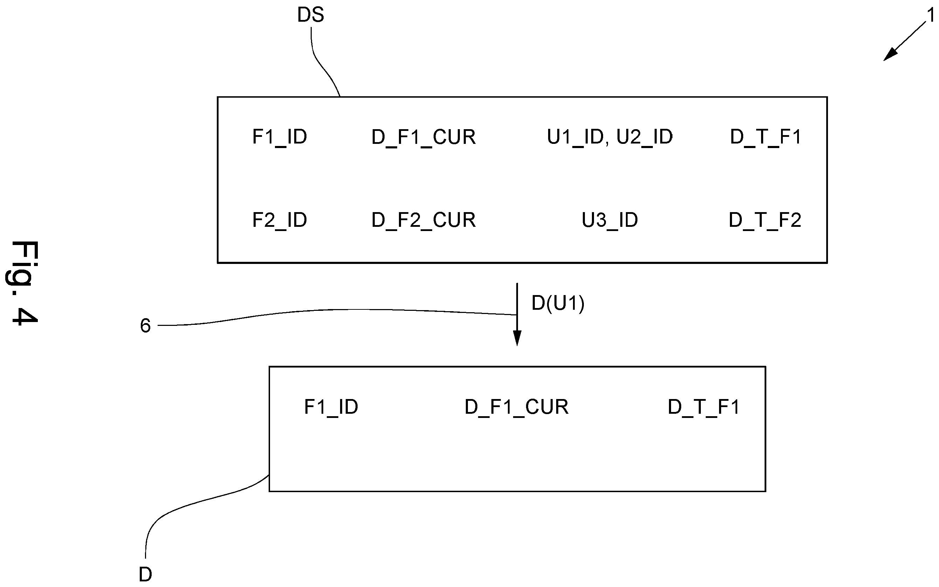

Fig. 4 zeigt, dass in der Schlüsseldatenbank und in dem aus der Schlüsseldatenbank erzeugten Schlüsseldatensatz D zu den Ist-Zugangsschlüsseln D_F1_CUR, D_F2_CUR jeweils auch der ursprüngliche Eintragungszeitpunkt D_T_F1, D_T_F2 des Ist-Zugangsschlüssels D_F1_CUR, D_F2_CUR vermerkt wird, wodurch entscheidbar wird, sofern verschiedene Ist-Zugangsschlüssel für ein Feldgerät F1 vorliegen, welcher der vorhandenen Ist-Zugangsschlüssel der aktuellste Ist-Zugangsschlüssel ist. Das gleiche gilt Sinngemäß auch für einen Schlüsseldatensatz, der auf einem Bediengerät hinterlegt ist. Auch hier wird der ursprüngliche Eintragungszeitpunkt B_T_F1 des Ist-Zugangsschlüssels B_F1_CUR hinterlegt.

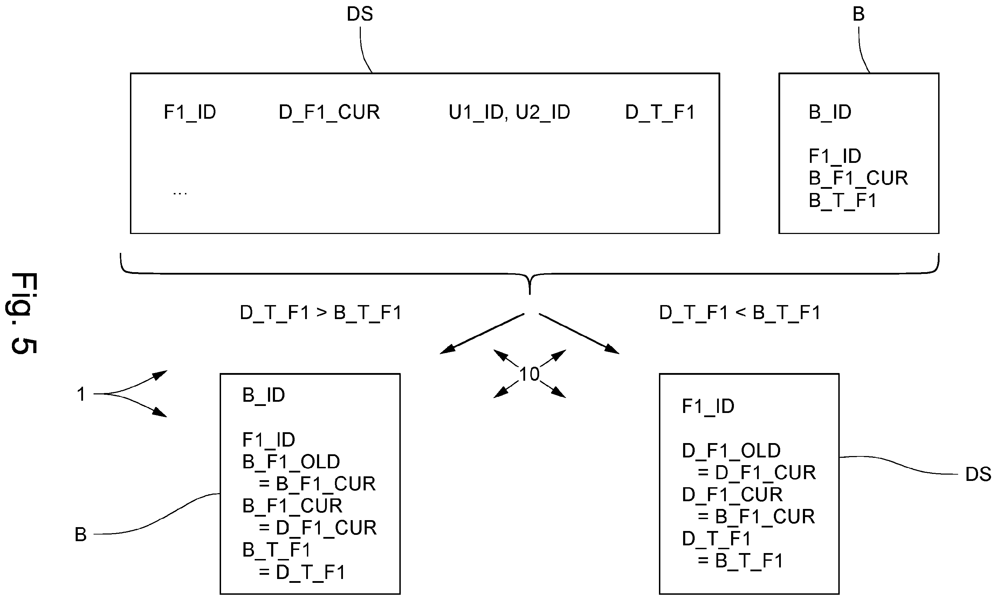

Fig. 5 zeigt das Verfahren 1, das um einen Synchronisationsschritt 10 ergänzt worden ist. In dem Synchronisationsschritt 10 werden die Schlüsseldatenbank des Datenbankservers DS und der Schlüsseldatensatz D des Bediengeräts B hinsichtlich der Eintragungszeitpunkte D_T_F1, B_T_F1 korrespondierender Ist-Zugangsschlüssel D_F1_CUR, B_F1_CUR des Feldgeräts F1 verglichen. Bei abweichenden Eintragungszeitpunkten D_T_F1, B_T_F1, in Fig. 5 angedeutet durch D_T_F1<B_T_F1 und D_T_F1>B_T_F1, wird der neuere Ist-Zugangsschlüssel D_F_1_CUR, B_F1_CUR mit seinem Eintragungszeitpunkt dort nachgetragen, wo nur der ältere Ist-Zugangsschlüssel D_F1_CUR, B _F1_CUR vorliegt, sodass die Schlüsseldatenbank des Datenbankservers DS und der Schlüsseldatensatz D des Bediengeräts B übereinstimmende Ist-Zugangsschlüssel D _F1_CUR, B _F1_CUR für das jeweilige Feldgerät F1 aufweisen.

Der beschriebene Vorgang ist dargestellt für den Fall, dass der in der Schlüsseldatenbank auf dem Datenbankserver DS hinterlegte Ist-Zugangsschlüssel D_F1_CUR für das Feldgerät F1 einen späteren Eintragungszeitpunkt D_T_F1 aufweist als der Eintragungszeitpunkt B_T_F1 im Schlüsseldatensatz des Bediengeräts B (nach links weisender Pfeil), und für den anderen Fall, dass der in der Schlüsseldatenbank auf dem Datenbankserver DS hinterlegte Ist-Zugangsschlüssel D_F1_CUR für das Feldgerät F1 einen früheren Eintragungszeitpunkt D_T_F1 aufweist als der Eintragungszeitpunkt B_T_F1 im Schlüsseldatensatz des Bediengeräts B (nach rechts weisender Pfeil).

In dem Ausführungsbeispiel werden auch die Eintragungszeitpunkte D_T_F1, B_T_F1 entsprechend nachgetragen. Ferner wird der Synchronisationsschritt 10 in dem dargestellten Ausführungsbeispiel automatisch durchgeführt, sobald sich das Bediengerät B mit der Schlüsseldatenbank des Datenbankservers DS verbindet. Der Synchronisationsschritt 10 ist in dem Ausführungsbeispiel gemäß Fig. 5 ferner so realisiert, dass der nachgetragene neuere Ist-Zugangsschlüssel nicht den älteren Ist-Zugangsschlüssel ersetzt, also so ersetzt, dass der ältere Ist-Zugangsschlüssel nicht mehr verfügbar ist, sondern es wird der nachgetragene neuere Ist-Zugangsschlüssel zusätzlich zu dem älteren Ist-Zugangsschlüssel vermerkt, sodass der zuvor geltende Ist-Zugangsschlüssel auch noch verfügbar ist (in Fig. 5 verdeutlicht durch B_F1_OLD = B_F1_CUR und D_F1_OLD = D_F1_CUR). Noch ältere Ist-Zugangsschlüssel werden hier gelöscht, sodass nur die letzten beiden aktuellsten Versionen des Ist-Zugangsschlüssels (B_F1_OLD und B_F1_CUR bzw. D_F1_OLD und D_F1_CUR) verfügbar sind. In einer anderen, hier nicht dargestellten Ausgestaltung des Verfahrens werden auch weiter zurückliegende Ist-Zugangsschlüssel älterer Eintragungszeitpunkte gespeichert.

Mit den verschiedenen Komponenten des zuvor beschriebenen Verfahrens 1 lässt sich die Vorgabe eines Neu-Zugangsschlüssels B_F1_New über das Bediengerät B nun wie folgt beschreiben, wobei es einer neuen Figur nicht bedarf, die erforderlichen Schritte sind im Prinzip in den Figuren 1 und 5 dargestellt. Das Bediengerät B verfügt über einen Neu-Zugangsschlüssel B_F1_NEW für das Feldgerät F1, der dem Bediengerät hier durch den Nutzer U1 vorgegeben worden ist. Dem Feldgerät F1 wird von dem über die Kommunikationsverbindung 2 mit dem Feldgerät F1 in Verbindung stehenden Bediengerät B der Neu-Zugangsschlüssel B_F1_NEW vorgegeben und der Neu-Zugangsschlüssel B_F1_NEW wird von dem Feldgerät F1 als neuer Ist-Zugangsschlüssel F1_CUR abgelegt 5. Das Bediengerät B speichert den Neu-Zugangsschlüssel B_F1_NEW als neuen Ist-Zugangsschlüssel B_F1_CUR in seinem Schlüsseldatensatz. Das Bediengerät B stellt dann eine Verbindung zur Schlüsseldatenbank des Datenbankservers DS her und leitet den Synchronisationsschritt 10 ein. Es gibt Realisierungen des Verfahrens 1, bei denen es nicht unmittelbar möglich ist, sogleich den Synchronisationsschritt 10 einzuleiten, beispielsweise weil es nicht möglich ist, sofort den Datenbankserver DS zu kontaktieren. Dann wird der Synchronisationsschritt 10 mit zeitlichem Abstand durchgeführt, wenn eine Verbindung zu dem Datenbankserver DS hergestellt werden kann.

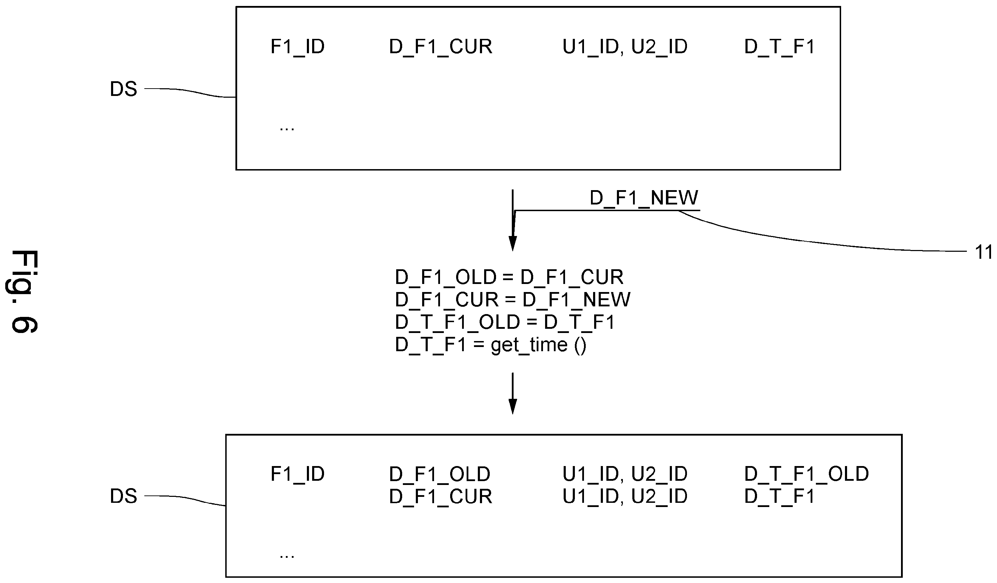

In Fig. 6 ist das Verfahrens 1 beschrieben, wobei die Vorgabe 11 eines Neu-Zugangsschlüssels D_F1_NEW über den Datenbankserver DS erfolgt. Der Schlüsseldatenbank des Datenbankservers DS wird ein Neu-Zugangsschlüssel D_F1_NEW für das Feldgerät F1 vorgegeben 11. Der Neu-Zugangsschlüssel D_F1_NEW wird in der Schlüsseldatenbank des Datenbankservers DS für das Feldgerät F1 als neuer Ist-Zugangsschlüssel D_F1_CUR abgelegt, und der zuletzt gültige Ist-Zugangsschlüssel D_F1_CUR für das Feldgerät F1 bleibt als alter Ist-Zugangsschlüssel D_F1_OLD in der Schlüsseldatenbank gespeichert. Hier wird auch der Eintragungszeitpunkt D_T_F1_OLD des alten Ist-Zugangsschlüssels gespeichert. Zum Zeitpunkt des Neu-Eintrags des neuen Ist-Zugangsschlüssels wird der Eintragungszeitpunkt D_T_F1 erfasst (get_time()). Wenn aus der Schlüsseldatenbank der Schlüsseldatensatz D erzeugt wird, wird der Ist-Zugangsschlüssel D_F1_CUR und zumindest der zuletzt gültige Ist-Zugangsschlüssel D_F1_OLD für das Feldgerät F1 in den Schlüsseldatensatz D aufgenommen. Im Synchronisationsschritt 10 bleibt beim Nachtragen des neuesten Ist-Zugangsschlüssels (B_F1_CUR = D_F1_CUR) im Bediengerät B zumindest der zuvor geltende ältere Ist-Zugangsschlüssel (B_F1_OLD = B_F1_CUR) erhalten (siehe auch Fig. 5).

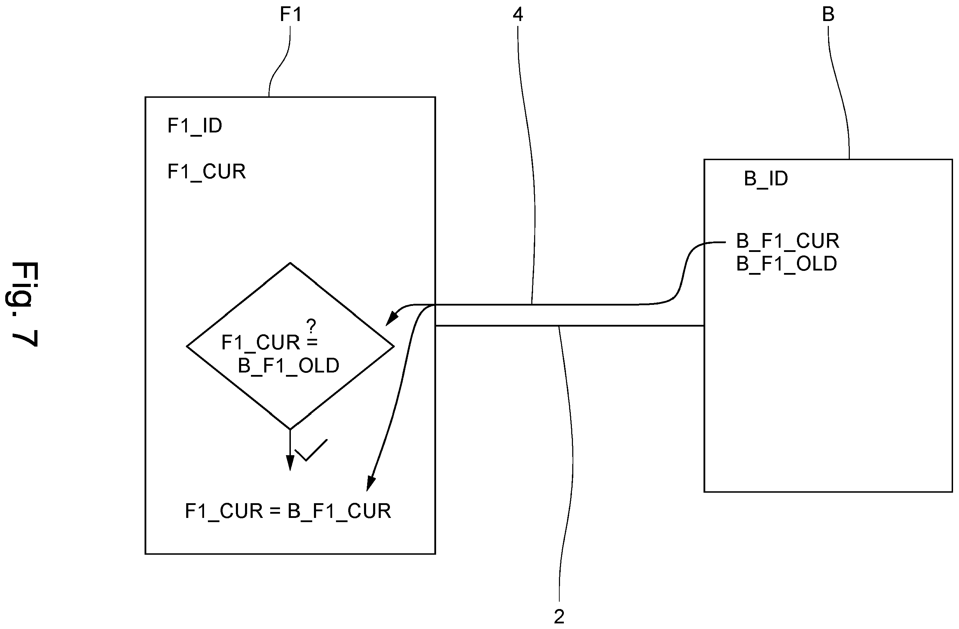

In Fig. 7 ist schematisch das Verfahren 1 dargestellt, für den Fall der Weitergabe eines Neu-Zugangsschlüssels von dem Bediengerät B an das Feldgerät F1, wobei der Neu-Zugangsschlüssel der Ist-Zugangsschlüssel B_F1_CUR des Bediengeräts B ist. Das Bediengerät B ist mit dem Feldgerät F1 verbunden, zu dem es eine Zugangsberechtigung hat. Das Bediengerät B weist den Schlüsseldatensatz mit dem Ist-Zugangsschlüssel B_F1_CUR und dem zuvor geltenden Ist-Zugangsschlüssel B_F1_OLD für das Feldgerät F1 auf. Zur Erlangung der Zugangsberechtigung zu dem Feldgerät F1 verwendet das Bediengerät B den zuvor geltenden Ist-Zugangsschlüssel B_F1_OLD, und bei Vorliegen der Zugangsberechtigung übermittelt das Bediengerät B dem Feldgerät F1 den Ist-Zugangsschlüssel B_F1_CUR als Neu-Zugangsschlüssel. Für den Fall, dass das Bediengerät mit dem zuvor geltenden Ist-Zugangsschlüssel B_F1_OLD keine Zugangsberechtigung erhält, übermittelt das Bediengerät B zur Überprüfung 3 der Zugangsberechtigung den Ist-Zugangsschlüssel B_F1_CUR, sodass auch der Fall abgedeckt ist, dass der Ist-Zugangsschlüssel in dem Feldgerät F1 schon vorher, beispielsweise durch ein anderes Bediengerät, durch den Neu-Zugangsschlüssel ersetzt worden ist.

Bei einer alternativen Vorgehensweise, die hier nicht dargestellt ist, ist bei dem Verfahren 1 vorgesehen, dass das Bediengerät B mit dem Feldgerät F1 verbunden ist, zu dem es eine Zugangsberechtigung hat, dass das Bediengerät B einen Schlüsseldatensatz mit dem Ist-Zugangsschlüssel B_F1_CUR und dem zuvor geltenden Ist-Zugangsschlüssel B_F1_OLD für das Feldgerät F1 aufweist, dass das Bediengerät B zur Erlangung der Zugangsberechtigung zu dem Feldgerät F1 zunächst den Ist-Zugangsschlüssel B_F1_CUR verwendet und bei Verweigerung der Zugangsberechtigung den zuvor geltenden Ist-Zugangsschlüssel B_F1_OLD verwendet. Bei diesem Ausführungsbeispiel wird also die Prüfreihenfolge bei der Überprüfung 3 der Zugangsberechtigung umgedreht.

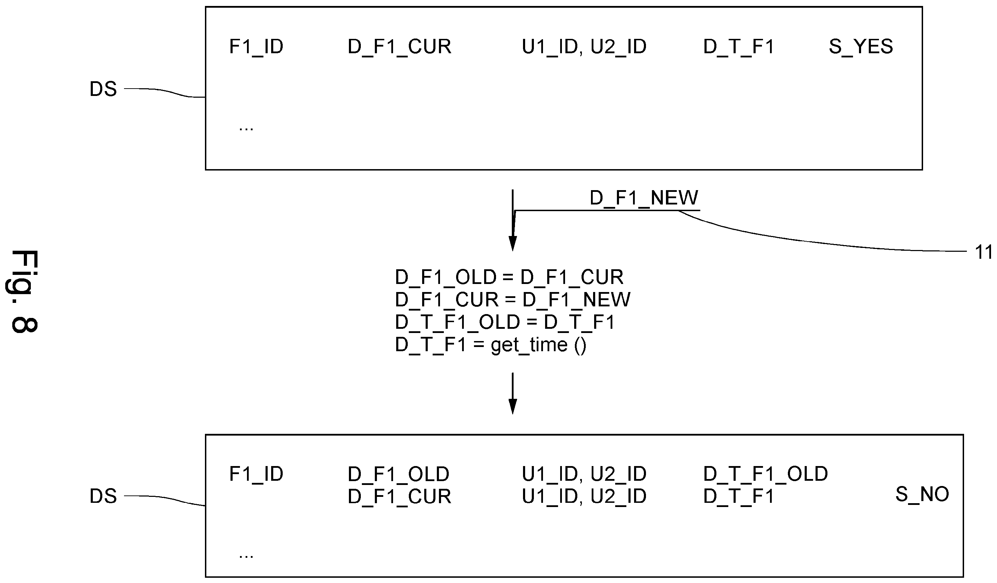

Fig. 8 schlägt eine Weiterentwicklung des Verfahrens 1 vor, das einen sicheren Indikator zum Anzeigen eines auf dem Feldgerät F1 erfolgreich hinterlegten neuen Ist-Zugangsschlüssels aufweist. Das Verfahren 1 ist dadurch gekennzeichnet, dass der Neu-Zugangsschlüssel D_F1_NEW, der in der Schlüsseldatenbank des Datenbankservers DS für das Feldgerät F1 als neuer Ist-Zugangsschlüssel D_F1_CUR vorgegeben 11 und abgelegt wird (ähnlich Fig. 6), mit einem Synchronisationsflag S versehen wird, wobei das Synchronisationsflag S anzeigt, ob der neue Ist-Zugangsschlüssel D_F1_CUR auf dem Feldgerät F1 hinterlegt ist (S_YES) oder nicht auf dem Feldgerät hinterlegt ist (S_NO). In dem gezeigten Ausführungsbeispiel zeigt das Synchronisationsflag für den Ist-Zugangsschlüssel D_F1_CUR vor der Vorgabe eines neuen Ist-Zugangsschlüssels D_F1_NEW an, dass der Ist-Zugangsschlüssel D_F1_CUR auf dem Feldgerät F1 hinterlegt worden ist S_YES (oberer Block in Fig. 8).

Beim erstmaligen Abspeichern des Neu-Zugangsschlüssels D_F1_NEW als der neue Ist-Zugangsschlüssels D_F1_CUR zeigt das Synchronisationsflag S an, dass der Ist-Zugangsschlüssel D_F1_CUR nicht auf dem Feldgerät F1 hinterlegt ist S_NO. Bei der Erzeugung des Schlüsseldatensatzes (nicht dargestellt) wird das Synchronisationsflag auch in den Schlüsseldatensatz aufgenommen. Im darauffolgenden Synchronisationsschritt (nicht dargestellt) wird das Synchronisationsflag S ebenfalls abgeglichen, also, auch mit dem Schlüsseldatensatz auf das Bediengerät übertragen. Wenn der neue Ist-Zugangsschlüssel - wie zuvor beschrieben - erfolgreich auf das Feldgerät übertragen worden ist, wird das Synchronisationsflag von "Ist-Zugangsschlüssel nicht auf dem Feldgerät hinterlegt" (S_NO) zu "Ist-Zugangsschlüssel auf dem Feldgerät hinterlegt" (S_YES) auf dem Bediengerät geändert. Bei einem weiteren Synchronisationsvorgang wird das Synchronisationsflag bei dem Ist-Zugangsschlüssel für das Feldgerät F1 in der Schlüsseldatenbank des Datenbankservers DS dann von S_NO ("Ist-Zugangsschlüssel nicht auf dem Feldgerät hinterlegt") auf S_YES ("Ist-Zugangsschlüssel auf dem Feldgerät hinterlegt") geändert.

Mit anderen Worten sieht das Verfahren 1 unter Verwendung des Synchronisationsflags S vor, dass das Bediengerät B mit dem Feldgerät F1 verbunden wird, dass das Bediengerät B das Synchronisationsflag S des Ist-Zugangsschlüssels B_F1_CUR auswertet und in dem Fall, dass das Synchronisationsflag S "Ist-Zugangsschlüssel nicht auf dem Feldgerät hinterlegt" S_NO anzeigt, das Bediengerät zur Erlangung der Zugangsberechtigung zu dem Feldgerät F1 den zuvor geltenden Ist-Zugangsschlüssel B_F1_OLD verwendet und andernfalls den Ist-Zugangsschlüssel B_F1_CUR verwendet.

Weiterhin ist vorgesehen, dass das mit dem Feldgerät F1 verbundene Bediengerät B, zu dem es eine Zugangsberechtigung hat, nach Übertragung des neuen Ist-Zugangsschlüssels B_F1_CUR auf das Feldgerät F1 in seinem Schlüsseldatensatz das Synchronisationsflag S des übertragenen neuen Ist-Zugangsschlüssels B_F1_CUR auf "Ist-Zugangsschlüssel auf dem Feldgerät hinterlegt" S_YES ändert.

Unter Verwendung des Synchronisationsflags S ist es also gezielt möglich, zu erkennen, ob eine Übertragung eines neuen Ist-Zugangsschlüssels D_F1_CUR auf das Feldgerät F1 stattgefunden hat oder nicht, sodass auch das Bediengerät B erkennt, welchen Zugangsschlüssel es für den Zugriff auf das Feldgerät F1 wählen muss, und ob das Hinterlegen eines Ist-Zugangsschlüssels B_F1_CUR auf dem Feldgerät F1 als neuer Ist-Zugangsschlüssel noch erforderlich ist oder nicht. Das Verfahren 1 ermöglicht auch, am Datenbankserver DS zu erkennen, ob und wann die geplante Passwortänderung umgesetzt worden ist.

### Bezugszeichen

- 1: Verfahren
- 2: Kommunikationsverbindung
- 3: Überprüfung der Zugangsberechtigung
- 4: Übermitteln eines Neu-Zugangsschlüssels
- 5: Ablegen des Neu-Zugangsschlüssels als Ist-Zugangsschlüssel
- 6: Erzeugen eines Schlüsseldatensatzes
- 7: Übertragen eines Schlüsseldatensatzes
- 8: Verschlüsselung eines Schlüsseldatensatzes
- 9: Entschlüsselung eines verschlüsselten Schlüsseldatensatzes
- 10: Synchronisationsschritt
- 11: Vorgabe eines Neu-Zugangsschlüssels an den Datenbankserver

- F1, F2: Feldgeräte
- F1_CUR: Ist-Zugangsschlüssels des Feldgeräts F1
- F1_ID: Feldgerätekennung des Feldgerätes F1
- B: Bediengerät
- B_ID: Bediengerätekennung
- B_F1_CUR: Ist-Zugangsschlüssel des Feldgeräts F1 von Bediengerät B
- B_F1_NEW: Neu-Zugangsschlüssel
- B_F1_OLD: zuvor geltender Ist-Zugangsschlüssel vom Bediengerät
- DS: Datenbankserver
- D_F1_CUR: Ist-Zugangsschlüssel des Feldgeräts F1 vom Datenbankserver
- D_F1_NEW: Neu-Zugangsschlüssel vom Datenbankserver
- D_F1_OLD: zuvor geltender Ist_Zugangsschlüssel vom Datenbankserver
- D: Schlüsseldatensatz für Benutzer oder Bediengerät
- U1: Nutzer
- U1_ID: Nutzerkennung
- D_T_F1: ursprünglicher Eintragungszeitpunkt eines Ist-Zugangsschlüssels vom Datenbankserver
- B_T_F1: ursprünglicher Eintragungszeitpunkt eines Ist-Zugangsschlüssels vom Bediengerät

## Patentansprüche

1. Verfahren (1) zur Änderung eines Ist-Zugangsschlüssels (F1_CUR) in einem Feldgerät (F1) der Automatisierungstechnik, wobei in dem Feldgerät (F1) eine Feldgerätekennung (F1_ID) und der Ist-Zugangsschlüssel (F1_CUR) abgelegt sind, wobei ein Bediengerät (B) über eine Kommunikationsverbindung (2) mit dem Feldgerät (F1) verbindbar ist, wobei in dem Bediengerät (B) eine Bediengerätekennung (B_ID) und ein Ist-Zugangsschlüssel (B_F1_CUR) abgelegt sind, wobei das Feldgerät (F1) durch zumindest indirekte Auswertung seines Ist-Zugangsschlüssels (F1_CUR) und des Ist-Zugangsschlüssels (B F1 CUR) des Bediengeräts (B) die Zugangsberechtigung des Bediengeräts (B) überprüft (3) und wobei bei Vorliegen der Zugangsberechtigung das Bediengerät (B) mit dem Feldgerät (F1) einen Neu-Zugangsschlüssel (B F1 NEW) vereinbart (4), welchen Neu-Zugangsschlüssel (B F1 NEW) das Feldgerät (F1) als neuen Ist-Zugangsschlüssel (F1_CUR) ablegt,
wobei das Bediengerät den Neu-Zugangsschlüssel als neuen Ist-Zugangsschlüssel in seinem Schlüsseldatensatz ablegt,
wobei auf einem Datenbankserver (DS) eine Schlüsseldatenbank bereitgestellt ist und die Schlüsseldatenbank für eine Mehrzahl von Feldgeräten (F1, F2) zumindest die Feldgerätekennung (F1 ID, F2 ID) des jeweiligen Feldgeräts (F1, F2), den Ist-Zugangsschlüssel (D F1 CUR, D F2 CUR) des jeweiligen Feldgeräts (F1, F2) und die Kennung (U1 ID, U2 ID) wenigstens eines zugriffsberechtigten Nutzers (U1, U2, U3) und/oder wenigstens eines zugriffsberechtigten Bediengeräts (B) auf das jeweilige Feldgerät (F1, F2) umfasst,
wobei das Feldgerät (F1) eines der in der Schlüsseldatenbank geführten Feldgeräte ist und wobei das Bediengerät (B) das Bediengerät des zugriffsberechtigten Nutzers (U1) oder das zugriffsberechtigte Bediengerät ist,
wobei der Datenbankserver (DS) für wenigstens einen zugriffsberechtigten Nutzer (U1) oder wenigstens ein zugriffsberechtigtes Bediengerät (B) aus der Schlüsseldatenbank einen Schlüsseldatensatz (D) erzeugt (6), wobei der Schlüsseldatensatz (D) für die Feldgeräte (F1), zu denen der zugriffsberechtigte Nutzer (U1) oder das zugriffsberechtigte Bediengerät (B) eine Zugriffsberechtigung hat, die Feldgerätekennung (F1 ID) und den Ist-Zugangsschlüssel (D F1 CUR) des jeweiligen Feldgeräts (F1) umfasst, undwobei der Schlüsseldatensatz (D) auf das Bediengerät (B) des zugriffsberechtigten Nutzers (U1) oder auf das zugriffsberechtigte Bediengerät (B) übertragen wird (7), sodass das Bediengerät (B) des zugriffsberechtigten Nutzers (U1) oder das zugriffsberechtigte Bediengerät (B) über die Ist-Zugangsschlüssel (B F1 CUR = D F1 CUR) der Feldgeräte (F1) verfügt, für die eine Zugangsberechtigung vorliegt,
wobei in der Schlüsseldatenbank und in dem aus der Schlüsseldatenbank erzeugten Schlüsseldatensatz (D) und in dem Schlüsseldatensatz des Bediengeräts (B) zu den Ist-Zugangsschlüsseln (D_ F1 CUR, D_F2_CUR, B F1_CUR) jeweils auch der ursprüngliche Eintragungszeitpunkt (D_T_F1, D_T_F2; B_T_F1) des Ist-Zugangsschlüssels (D_F1_CUR, D_F2_CUR) vermerkt wird und in einem Synchronisationsschritt (10) die Schlüsseldatenbank und der Schlüsseldatensatz (D) des Bediengeräts (B) hinsichtlich der Eintragungszeitpunkte (D T F1, B T F1) korrespondierender Ist-Zugangsschlüssel (D F1 CUR, B F1 CUR) verglichen werden, und bei abweichenden Eintragungszeitpunkten (D T F1, B T F1) der neueste Ist-Zugangsschlüssel mit seinem Eintragungszeitpunkt dort nachgetragen wird, wo nur der ältere Ist-Zugangsschlüssel (D F1 CUR, B F1 CUR) vorliegt, sodass die Schlüsseldatenbank und der Schlüsseldatensatz (DS) des Bediengeräts (B) übereinstimmende Ist-Zugangsschlüssel (D F1 CUR, B F1 CUR) für das jeweilige Feldgerät (F1) aufweisen.

2. Verfahren (1) nach Anspruch 1, **dadurch gekennzeichnet, dass** der Schlüsseldatensatz (D) vor seiner Übertragung (7) auf das Bediengerät (B) des zugriffsberechtigten Nutzers (U1) oder auf das zugriffsberechtigte Bediengerät (B) verschlüsselt (8) wird und der verschlüsselte Schlüsseldatensatz (D) auf dem Bediengerät (B) vor der Nutzung entschlüsselt (9) wird.

3. Verfahren (1) nach Anspruch 1 oder 2, **dadurch gekennzeichnet, dass** der Synchronisationsschritt (10) automatisch durchgeführt wird, sobald sich ein Bediengerät (B) mit der Schlüsseldatenbank des Datenbankservers (DS) verbindet.

4. Verfahren (1) nach einem der Ansprüche 1 bis 3, **dadurch gekennzeichnet, dass** dem Feldgerät (F1) von dem über die Kommunikationsverbindung (2) mit dem Feldgerät (F1) in Verbindung stehenden Bediengerät (B) ein Neu-Zugangsschlüssel (B F1 NEW) vorgegeben wird und der Neu-Zugangsschlüssel (B F1 NEW) von dem Feldgerät (F1) als neuer Ist-Zugangsschlüssel (F1 CUR) abgelegt (5) wird, wobei das Bediengerät (B) den Neu-Zugangsschlüssel (B F1 NEW) als neuen Ist-Zugangsschlüssel (B F1 CUR) in seinem Schlüsseldatensatz ablegt, und dass das Bediengerät (B) entweder eine Verbindung (2) zur Schlüsseldatenbank des Datenbankservers (DS) herstellt und den Synchronisationsschritt (10) einleitet oder den Nutzer (U1) des Bediengeräts (B) auffordert, eine Verbindung (2) zur Schlüsseldatenbank herzustellen, um den Synchronisationsschritt (10) durchführen zu können.

5. Verfahren (1) nach einem der Ansprüche 1 bis 3, **dadurch gekennzeichnet, dass** der Schlüsseldatenbank des Datenbankservers (DS) ein Neu-Zugangsschlüssel (D_F1_NEW) für das Feldgerät (F1) vorgegeben wird und der Neu-Zugangsschlüssel (D_F1_NEW) von der Schlüsseldatenbank für das Feldgerät (F1) als neuer Ist-Zugangsschlüssel (D_F1_CUR) abgelegt wird und zumindest der zuletzt gültige Ist-Zugangsschlüssel (D_F1_CUR) für das Feldgerät (F1) als alter Ist-Zugangsschlüssel (D_F1_OLD) in der Schlüsseldatenbank gespeichert bleibt, wobei bei Erzeugung des Schlüsseldatensatzes (D) der Ist-Zugangsschlüssel (D_F1_CUR) und zumindest der zuletzt gültige Ist-Zugangsschlüssel (D_F1_OLD) für das Feldgerät (F1) in den Schlüsseldatensatz (D) aufgenommen wird, insbesondere wobei im Synchronisationsschritt (10) beim Nachtragen des neuesten Ist-Zugangsschlüssels (B_F1_CUR = D_F1_CUR) im Bediengerät (B) zumindest der zuvor geltende ältere Ist-Zugangsschlüssel (B_F1_OLD = B_F1_CUR) erhalten bleibt.

6. Verfahren (1) nach Anspruch 5, **dadurch gekennzeichnet, dass** das Bediengerät (B) mit dem Feldgerät (F1) verbunden ist, zu dem es eine Zugangsberechtigung hat, dass das Bediengerät (B) einen Schlüsseldatensatz mit dem Ist-Zugangsschlüssel (BF1_CUR) und dem zuvor geltenden Ist-Zugangsschlüssel (B_F1_OLD) für das Feldgerät (F1) aufweist, dass das Bediengerät (B) zur Erlangung der Zugangsberechtigung zu dem Feldgerät (F1) den zuvor geltenden Ist-Zugangsschlüssel (B_F1_OLD) verwendet und bei Vorliegen der Zugangsberechtigung dem Feldgerät (F1) den Ist-Zugangsschlüssel (B_F1_CUR) als Neu-Zugangsschlüssel übermittelt.

7. Verfahren (1) nach Anspruch 5, **dadurch gekennzeichnet, dass** das Bediengerät (B) mit dem Feldgerät (F1) verbunden ist, zu dem es eine Zugangsberechtigung hat, dass das Bediengerät (B) einen Schlüsseldatensatz mit dem Ist-Zugangsschlüssel (BF1_CUR) und dem zuvor geltenden Ist-Zugangsschlüssel (B_F1_OLD) für das Feldgerät (F1) aufweist, dass das Bediengerät (B) zur Erlangung der Zugangsberechtigung zu dem Feldgerät (F 1) zunächst den Ist-Zugangsschlüssel (B_F1_CUR) verwendet und bei Verweigerung der Zugangsberechtigung den zuvor geltenden Ist-Zugangsschlüssel (B_F1_OLD) verwendet.

8. Verfahren (1) nach einem der Ansprüche 5 bis 7, **dadurch gekennzeichnet, dass** der Neu-Zugangsschlüssel, der in der Schlüsseldatenbank für das Feldgerät (F1) als neuer Ist-Zugangsschlüssel (D_F1_CUR) abgelegt wird, mit einem Synchronisationsflag (S) versehen wird, wobei das Synchronisationsflag (S) anzeigt, ob der neue Ist-Zugangsschlüssel (D_F1_CUR) auf dem Feldgerät (F 1) hinterlegt ist (S_YES) oder nicht auf dem Feldgerät hinterlegt ist (S_NO), und dass das Synchronisationsflag (S) anzeigt, dass der Ist-Zugangsschlüssel (D_F1_CUR) nicht auf dem Feldgerät (F1) hinterlegt ist, wobei bei Erzeugung (6) des Schlüsseldatensatzes (D) das Synchronisationsflag (S) in den Schlüsseldatensatz (D) aufgenommen wird und wobei im Synchronisationsschritt (10) das Synchronisationsflag (S) abgeglichen wird, das Synchronisationsflag (S) aber nur von "Ist-Zugangsschlüssel nicht auf dem Feldgerät hinterlegt" (S_NO) zu "Ist-Zugangsschlüssel auf dem Feldgerät hinterlegt" (S_YES) geändert wird.

9. Verfahren (1) nach Anspruch 8, **dadurch gekennzeichnet, dass** das Bediengerät (B) mit dem Feldgerät (F1) verbunden wird, das Bediengerät (B) das Synchronisationsflag (S) des Ist-Zugangsschlüssels (B_F1_CUR) auswertet und in dem Fall, dass das Synchronisationsflag (S) "Ist-Zugangsschlüssel nicht auf dem Feldgerät hinterlegt" (S_NO) anzeigt, das Bediengerät zur Erlangung der Zugangsberechtigung zu dem Feldgerät den zuvor geltenden Ist-Zugangsschlüssel (B_F1_OLD) verwendet und andernfalls den Ist-Zugangsschlüssel (B_F1_CUR) verwendet.

10. Verfahren (1) nach Anspruch 9, **dadurch gekennzeichnet, dass** das Bediengerät (B) mit dem Feldgerät (F1) verbunden wird, zu dem es eine Zugangsberechtigung hat, und das Bediengerät (B) nach Übertragung des neuen Ist-Zugangsschlüssels (B_F1_CUR) auf das Feldgerät (F1) in seinem Schlüsseldatensatz das Synchronisationsflag (S) des übertragenen neuen Ist-Zugangsschlüssels (B_F1_CUR) auf "Ist-Zugangsschlüssel auf dem Feldgerät hinterlegt" (S_YES) ändert.

## Claims

1. Method (1) for changing an existing access key (F1_CUR) in a field device (F1) used in automation technology, wherein a field device identifier (F1_ID) and the existing access key (F1_CUR) are stored in the field device (F1), wherein a control unit (B) can be connected via a communication link (2) to the field device (F1), wherein a control unit identifier (B_ID) and an existing access key (B_F1_CUR) are stored in the control unit (B), wherein the field device (F1) checks (3) the access authorization of the control unit (B) through at least indirect evaluation of its existing access key (F1_CUR) and the existing access key (B_F1_CUR) of the control unit (B) and wherein, if access authorization is present, the control unit (B) agrees on (4) a new access key (B_F1_NEW) with the field device (F1), the field device (F1) storing the new access key (B_F1_NEW) as the new existing access key (F1_CUR),
wherein the control unit stores the new access key as the new existing access key in its key data set,
wherein a key database is provided on a database server (DS), and the key database contains, for a plurality of field devices (F1, F2), at least the field device identifier (F1_ID, F2_ID) of the respective field device (F1, F2), the existing access key (D_F1_CUR, D_F2_CUR) of the respective field device (F1, F2), and the identifier (U1_ID, U2_ID) of at least one authorized user (U1, U2, U3) and/or at least one authorized control unit (B) for the respective field device (F1, F2),
wherein the field device (F1) is one of the field devices stored in the key database, and wherein the control unit (B) is the control unit of the authorized user (U1) or the authorized control unit,
wherein the database server (DS) generates (6) a key data set (D) from the key database for at least one authorized user (U1) or at least one authorized control unit (B) from the key database, wherein the key data set (D) comprises, for the field devices (F1) to which the authorized user (U1) or the authorized control unit (B) has access authorization, the field device identifier (F1_ID) and the existing access key (D_F1_CUR) of the respective field device (F1), and wherein the key data set (D) is transferred (7) to the control unit (B) of the authorized user (U1) or to the authorized control unit (B), so that the control unit (B) of the authorized user (U1) or the authorized control unit (B) has the existing access keys (B_F1_CUR = D_F1_CUR) for the field devices (F1) for which access authorization exists,
wherein, in the key database, in the key data set (D) generated from the key database, and in the key data set of the control unit (B), for each of the existing access keys (D_F1_CUR, D_F2_CUR, B_F1_CUR), the original entry time (D_T_F1, D_T_F2; B_T_F1) of the existing access key (D_F1_CUR, D_F2_CUR) is also recorded, and
in a synchronization step (10), the key database and the key data set (D) of the control unit (B) are compared with respect to the entry times (D_T_F1, B_T_F1) of the corresponding existing access keys (D_F1_CUR, B_F1_CUR), and if the entry times differ (D_T_F1, B_T_F1), the most recent existing access key is added with its entry time to the location where only the older existing access key (D_F1_CUR, B_F1_CUR) is present, so that the key database and the key data set (DS) of the control unit (B) contain matching existing access keys (D_F1_CUR, B_F1_CUR) for the respective field device (F1).

2. Method (1) according to claim 1, **characterized in that** the key data set (D) is encrypted (8) prior to its transmission (7) to the control unit (B) of the authorized user (U1) or to the authorized control unit (B), and the encrypted key data set (D) is decrypted (9) on the control unit (B) prior to use.

3. Method (1) according to claim 1 or 2, **characterized in that** the synchronization step (10) is performed automatically as soon as a control unit (B) connects to the key database of the database server (DS).

4. Method (1) according to any one of claims 1 through 3, **characterized in that** a new access key (B_F1_NEW) is provided to the field device (F1) by the control unit (B), which is connected to the field device (F1) via the communication link (2), and the new access key (B_F1_NEW) is stored (5) by the field device (F1) as the new existing access key (F1_CUR), wherein the control unit (B) stores the new access key (B_F1_NEW) as the new existing access key (B_F1_CUR) in its key data set, and that the control unit (B) either establishes a connection (2) to the key database of the database server (DS) and initiates the synchronization step (10), or prompts the user (U1) of the control unit (B) to establish a connection (2) to the key database in order to be able to perform the synchronization step (10).

5. Method (1) according to any one of claims 1 through 3, **characterized in that** a new access key (D_F1_NEW) for the field device (F1) is specified in the key database of the database server (DS), and the new access key (D_F1_NEW) is stored by the key database for the field device (F1) as the new existing access key (D_F1_CUR), and at least the most recently valid existing access key (D_F1_CUR) for the field device (F1) remains stored in the key database as the old existing access key (D_F1_OLD), wherein, upon creation of the key data set (D), the existing access key (D_F1_CUR) and at least the most recently valid existing access key (D_F1_OLD) for the field device (F1) are included in the key data set (D), in particular, wherein during the synchronization step (10), when the latest existing access key (B_F1_CUR = D_F1_CUR) is updated in the control unit (B), at least the previously valid older existing access key (B_F1_OLD = B_F1_CUR) is retained.

6. Method (1) according to claim 5, **characterized in that** the control unit (B) is connected to the field device (F1), to which it has access authorization; and that the control unit (B) contains a key data set comprising the existing access key (B_F1_CUR) and the previously valid existing access key (B_F1_OLD) for the field device (F1), that the control unit (B) uses the previously valid existing access key (B_F1_OLD) to obtain access authorization to the field device (F1) and, if access authorization is granted, transmits the existing access key (B_F1_CUR) to the field device (F1) as the new access key.

7. Method (1) according to claim 5, **characterized in that** the control unit (B) is connected to the field device (F1), to which it has access authorization, and that the control unit (B) has a key data set containing the existing access key (B_F1_CUR) and the previously valid existing access key (B_F1_OLD) for the field device (F1), that the control unit (B), in order to obtain access authorization to the field device (F1), first uses the existing access key (B_F1_CUR) and, if access is denied, uses the previously valid existing access key (B_F1_OLD).

8. Method (1) according to any one of claims 5 through 7, **characterized in that** the new access key, which is stored in the key database for the field device (F1) as the new existing access key (D_F1_CUR), is assigned a synchronization flag (S), wherein the synchronization flag (S) indicates whether the new existing access key (D_F1_CUR) is stored on the field device (F1) (S_YES) or is not stored on the field device (S_NO), and that the synchronization flag (S) indicates that the existing access key (D_F1_CUR) is not stored on the field device (F1), wherein upon generation (6) of the key data set (D), the synchronization flag (S) is included in the key data set (D), and wherein, in the synchronization step (10), the synchronization flag (S) is updated, but the synchronization flag (S) is changed only from "Existing access key not stored on the field device" (S_NO) to "Existing access key is stored on the field device" (S_YES).

9. Method (1) according to claim 8, **characterized in that** the control unit (B) is connected to the field device (F1), the control unit (B) evaluates the synchronization flag (S) of the existing access key (B_F1_CUR), and, if the synchronization flag (S) indicates "Existing access key not stored on the field device" (S_NO), the control unit uses the previously valid existing access key (B_F1_OLD) to obtain access authorization to the field device, and otherwise uses the existing access key (B_F1_CUR).

10. Method (1) according to claim 9, **characterized in that** the control unit (B) is connected to the field device (F1) to which it has access authorization, and the control unit (B), after transmitting the new existing access key (B_F1_CUR) to the field device (F1), changes the synchronization flag (S) of the transmitted new existing access key (B_F1_CUR) in its key data set to "Existing access key stored on the field device" (S_YES).

## Revendications

1. Procédé (1) de modification d'une clé d'accès réelle (F1_CUR) dans un appareil de terrain (F1) de technologie d'automatisation, dans lequel un identifiant d'appareil de terrain (F1_ID) et la clé d'accès réelle (F1_CUR) sont mémorisés dans l'appareil de terrain (F1), un appareil utilisateur (B) pouvant être connecté à l'appareil de terrain (F1) par l'intermédiaire d'une liaison de communication (2), un identifiant d'appareil utilisateur (B_ID) et une clé d'accès réelle (B_F1_CUR) étant mémorisés dans l'appareil utilisateur (B), l'appareil de terrain (F1) vérifiant (3) l'autorisation d'accès de l'appareil utilisateur (B) par évaluation au moins indirecte de sa clé d'accès réelle (F1_CUR) et de la clé d'accès réelle (B_F1_CUR) de l'appareil utilisateur (B) et, en présence de l'autorisation d'accès, l'appareil utilisateur (B) convenant (4) avec l'appareil de terrain (F1) d'une nouvelle clé d'accès (B_F1_NEW), laquelle nouvelle clé d'accès (B_F1_NEW) est mémorisée par l'appareil de terrain (F1) en tant que nouvelle clé d'accès réelle (F1_CUR),
l'appareil utilisateur mémorisant la nouvelle clé d'accès en tant que nouvelle clé d'accès réelle dans son ensemble de données de clés,
une base de données de clés étant mise à disposition sur un serveur de base de données (DS) et la base de données de clés comprenant, pour une pluralité d'appareils de terrain (F1, F2), au moins l'identificateur d'appareil de terrain (F1 ID, F2 ID) de l'appareil de terrain (F1, F2) respectif, la clé d'accès réelle (D F1 CUR, D F2 CUR) de l'appareil de terrain (F1, F2) respectif et l'identifiant (U1_ID, U2_ID) d'au moins un utilisateur autorisé (U1, U2, U3) et/ou d'au moins un appareil utilisateur (B) autorisé à accéder à l'appareil de terrain (F1, F2) respectif,
l'appareil de terrain (F1) étant l'un des appareils de terrain contenus dans la base de données de clés et l'appareil utilisateur (B) étant l'appareil utilisateur de l'utilisateur autorisé (U1) ou l'appareil utilisateur autorisé,
le serveur de base de données (DS) générant un ensemble de données de clés (D) à partir de la base de données clés (6) pour au moins un utilisateur autorisé (U1) ou au moins un appareil utilisateur autorisé (B), l'ensemble de données de clés (D) comprenant, pour les appareils de terrain (F1) auxquels l'utilisateur autorisé (U1) ou l'appareil utilisateur autorisé (B) possède une autorisation d'accès, l'identifiant d'appareil de terrain (F1 ID) et la clé d'accès réelle (D F1 CUR) de l'appareil de terrain (F1) respectif, et l'enregistrement de données de clés (D) étant transmis (7) à l'appareil utilisateur (B) de l'utilisateur autorisé (U1) ou à l'appareil utilisateur (B) autorisé, de sorte que l'appareil utilisateur (B) de l'utilisateur autorisé (U1) ou l'appareil utilisateur (B) autorisé dispose des clés d'accès réelles (B F1 CUR = D F1 CUR) des appareils de terrain (F1) pour lesquels une autorisation d'accès est présente,
l'instant d'enregistrement d'origine (D_T_F1, D_T_F2 ; B_T_F1) de la clé d'accès réelle (D_F1_CUR, D_F2_CUR) étant respectivement consigné en association avec les clés d'accès réelles (D_F1_CUR, D_F2_CUR, B_F1_CUR), dans la base de données de clés, dans l'ensemble de données de clés (D) généré à partir de la base de données de clés et dans l'ensemble de données de clés de l'appareil utilisateur (B), et
lors d'une étape de synchronisation (10), la base de données de clés et l'ensemble de données de clés (D) de l'appareil utilisateur (B) étant comparés en ce qui concerne les instants d'enregistrement (D_T_F1, B_T_F1) de clés d'accès réelles (D F1 CUR, B F1 CUR) correspondantes et, en cas d'instants d'enregistrement (D_T_F1, B_T_F1) divergents, la clé d'accès réelle la plus récente est ajoutée avec son instant d'enregistrement là où seule la clé d'accès réelle (D F1 CUR, B F1 CUR) plus ancienne est présente, de sorte que la base de données de clés et l'enregistrement de données de clés (D) de l'appareil utilisateur (B) comportent des clés d'accès réelles (D F1 CUR, B F1 CUR) concordantes pour l'appareil de terrain (F1) respectif.

2. Procédé (1) selon la revendication 1, **caractérisé en ce que** l'ensemble de données de clés (D) est crypté (8) avant sa transmission (7) à l'appareil utilisateur (B) de l'utilisateur autorisé (U1) ou à l'appareil utilisateur (B) autorisé, et l'ensemble de données de clés (D) chiffré est déchiffré (9) sur l'appareil utilisateur (B) avant son utilisation.

3. Procédé (1) selon la revendication 1 ou 2, **caractérisé en ce que** l'étape de synchronisation (10) est exécutée automatiquement dès qu'un appareil utilisateur (B) se connecte à la base de données de clés du serveur de base de données (DS).

4. Procédé (1) selon l'une quelconque des revendications 1 à 3, **caractérisé en ce qu'**une nouvelle clé d'accès (B F1 NEW) est prédéfinie pour l'appareil de terrain (F1) par l'appareil utilisateur (B) se trouvant en liaison avec l'appareil de terrain (F1) par l'intermédiaire de la liaison de communication (2), et la nouvelle clé d'accès (B F1 NEW) est mémorisée (5) par l'appareil de terrain (F1) en tant que nouvelle clé d'accès réelle (F1 CUR), l'appareil utilisateur (B) mémorisant la nouvelle clé d'accès (B F1 NEW) en tant que nouvelle clé d'accès réelle (B F1 CUR) dans son ensemble de données de clés, et **en ce que** l'appareil utilisateur (B) soit établit une connexion (2) avec la base de données de clés du serveur de base de données (DS) et initie l'étape de synchronisation (10), soit invite l'utilisateur (U1) de l'appareil utilisateur (B) à établir une connexion (2) avec la base de données de clés afin de pouvoir exécuter l'étape de synchronisation (10).

5. Procédé (1) selon l'une quelconque des revendications 1 à 3, **caractérisé en ce qu'**une nouvelle clé d'accès (D_F1_NEW) pour l'appareil de terrain (F1) est prédéfinie pour la base de données de clés du serveur de base de données (DS), et la nouvelle clé d'accès (D_F1_NEW) est mémorisée par la base de données de clés pour l'appareil de terrain (F1) en tant que nouvelle clé d'accès réelle (D_F1_CUR), et au moins la clé d'accès réelle valide en dernier lieu (D_F1_CUR) pour l'appareil de terrain (F1) reste enregistrée en tant qu'ancienne clé d'accès réelle (D_F1_OLD) dans la base de données de clés, lors de la génération de l'ensemble de données de clés (D), la clé d'accès réelle (D_F1_CUR) et au moins la clé d'accès réelle valide en dernier lieu (D_F1_OLD) pour l'appareil de terrain (F1) étant intégrées dans l'ensemble de données de clés (D), en particulier, lors de l'étape de synchronisation (10), lors de l'ajout de la clé d'accès réelle la plus récente (B_F1_CUR = D_F1_CUR) dans l'appareil utilisateur (B), au moins la clé d'accès réelle plus ancienne précédemment valide (B_F1_OLD = B_F1_CUR) étant conservée.

6. Procédé (1) selon la revendication 5, **caractérisé en ce que** l'appareil utilisateur (B) est connecté à l'appareil de terrain (F1) auquel il possède une autorisation d'accès, **en ce que** l'appareil utilisateur (B) présente un ensemble de données de clés comprenant la clé d'accès réelle (B_F1_CUR) et la clé d'accès réelle précédemment valide (B_F1_OLD) pour l'appareil de terrain (F1), **en ce que** l'appareil utilisateur (B) utilise la clé d'accès réelle précédemment valide (B_F1_OLD) pour obtenir l'autorisation d'accès à l'appareil de terrain (F1) et, en présence de l'autorisation d'accès, transmet la clé d'accès réelle (B_F1_CUR) à l'appareil de terrain (F1) en tant que nouvelle clé d'accès.

7. Procédé (1) selon la revendication 5, **caractérisé en ce que** l'appareil utilisateur (B) est connecté à l'appareil de terrain (F1) auquel il possède une autorisation d'accès, **en ce que** l'appareil utilisateur (B) présente un ensemble de données de clés comprenant la clé d'accès réelle (B_F1_CUR) et la clé d'accès réelle précédemment valide (B_F1_OLD) pour l'appareil de terrain (F1), **en ce que** l'appareil utilisateur (B) utilise d'abord la clé d'accès réelle (B_F1_CUR) pour obtenir l'autorisation d'accès à l'appareil de terrain (F1) et, en cas de refus de l'autorisation d'accès, utilise la clé d'accès réelle précédemment valide (B_F1_OLD).

8. Procédé (1) selon l'une quelconque des revendications 5 à 7, **caractérisé en ce que** la nouvelle clé d'accès, qui est mémorisée dans la base de données de clés pour l'appareil de terrain (F1) en tant que nouvelle clé d'accès réelle (D_F1_CUR), est pourvue d'un fanion de synchronisation (S), le fanion de synchronisation (S) indiquant si la nouvelle clé d'accès réelle (D_F1_CUR) est enregistrée sur l'appareil de terrain (F1) (S_YES) ou n'est pas enregistrée sur l'appareil de terrain (S_NO), et **en ce que** le fanion de synchronisation (S) indique que la clé d'accès réelle (D_F1_CUR) n'est pas enregistrée sur l'appareil de terrain (F1), le fanion de synchronisation (S), lors de la génération (6) de l'ensemble de données de clés (D), étant intégré dans l'ensemble de données de clés (D), et le fanion de synchronisation (S), lors de l'étape de synchronisation (10), étant aligné, mais le fanion de synchronisation (S) étant uniquement modifié de « clé d'accès réelle non enregistrée sur l'appareil de terrain » (S_NO) à « clé d'accès réelle enregistrée sur l'appareil de terrain » (S_YES).

9. Procédé (1) selon la revendication 8, **caractérisé en ce que** l'appareil utilisateur (B) est connecté à l'appareil de terrain (F1), l'appareil utilisateur (B) évalue le fanion de synchronisation (S) de la clé d'accès réelle (B_F1_CUR) et, dans le cas où le fanion de synchronisation (S) indique « clé d'accès réelle non enregistrée sur l'appareil de terrain » (S_NO), l'appareil utilisateur (B) utilise la clé d'accès réelle précédemment valide (B_F1_OLD) pour obtenir l'autorisation d'accès à l'appareil de terrain et, dans le cas contraire, utilise la clé d'accès réelle (B_F1_CUR).

10. Procédé (1) selon la revendication 9 **caractérisé en ce que** l'appareil utilisateur (B) est connecté à l'appareil de terrain (F1) auquel il possède une autorisation d'accès, et l'appareil utilisateur (B) modifie, dans son ensemble de données de clés, le fanion de synchronisation (S) de la nouvelle clé d'accès réelle (B_F1_CUR) transmise en « clé d'accès réelle enregistrée sur l'appareil de terrain » (S_YES) après transmission de la nouvelle clé d'accès réelle (B_F1_CUR) à l'appareil de terrain (F1).
